# EUROPEAN PATENT APPLICATION

(11) **EP 4 451 301 A1**
(43) Date of publication of application: **23.10.2024**
(21) Application number: 23770331.9
(22) Date of filing: 24.02.2023
(51) Int. Cl.: H01G 11/26, H01G 11/60, H01G 11/86

(54) **ELECTRIC DOUBLE LAYER CAPACITOR AND METHOD FOR PRODUCING SAME**

(30) Priority: 14.03.2022 JP 2022039298
(71) Applicant: Nippon Chemi-Con Corporation, Tokyo 141-8605 (JP)
(72) Inventor: KAWASAKI Yusuke, Tokyo 141-8605 (JP); HAGIYA Masayuki, Tokyo 141-8605 (JP)
(74) Representative: AWA Sweden AB
(86) International application number: PCT/JP2023/006799
(87) International publication number: WO 2023/176372

(57) **Abstract**

An electric double layer capacitor and a manufacturing method thereof that suppress the deterioration of the capacitance over time even when γ-butyrolactone is used as the solvent is provided. The electric double layer capacitor is produced by impregnating an element in which a positive electrode and a negative electrode is wound via a separator with electrolytic solution containing γ-butyrolactone as a solvent. Capacitance Cp of the positive electrode and capacitance Cn of the negative electrode are Cp>Cn. The positive electrode is formed to have electrode potential (vs Ag/Ag+) of +0.71 V to +0.62 V, and the negative electrode is formed to have electrode potential (vs Ag/Ag+) of -1.99 V to -2.08 V. The element is formed by winding the positive electrode and the negative electrode via the separator, and the element is impregnated with electrolytic solution containing γ-butyrolactone as a solvent.

## Description

### FIELD OF INVENTION

The present disclosure relates to a wound-type electric double layer capacitor including γ-butyrolactone as a solvent, and a manufacturing method thereof.

### BACKGROUND

An electric double layer capacitor is formed by housing an element which is a pair of polarizable electrodes impregnated with electrolytic solution in a container, and utilizes electricity storage action of an electric double layer formed at an interface of the polarizable electrode and the electrolytic solution. The electric double layer capacitor is advantageous in having long lifetime with little deterioration of electrode active material due to repeated charging and discharging.

Typically, in the electric double layer capacitor, activated carbon powder is used for polarizable electrode material, metal with valve action such as aluminum is used for a current collector, and aprotic electrolytic solution is used as the electrolytic solution. Quaternary ammonium salt is mainly used for an electrolyte of the electrolytic solution. Typically, carbonate compounds such as polypropylene carbonate and carboxylic acid ester compounds such as γ-butyrolactone are used for a solvent of the electrolytic solution (for example, refer Patent Document 1).

### PRIOR ART DOCUMENT

### PATENT DOCUMENT

Patent Document 1: JP2001-217150A

### SUMMARY OF INVENTION

### PROBLEMS TO BE SOLVED BY INVENTION

The carbonate solvent generates carbon monoxide gas due to decomposition of the solvent, which may increase internal pressure of the electric double layer capacitor. On the other hand, γ-butyrolactone is advantageous in that gas due to decomposition does not occur. However, along with the recent demand for higher withstand voltage, the capacitance over time of the electric double layer capacitor using γ-butyrolactone tends to show larger deterioration.

The present disclosure is proposed to address the above-described problem. The objective is to provide an electric double layer capacitor and a manufacturing method thereof that suppress the deterioration of the capacitance over time even when γ-butyrolactone is used as the solvent.

### MEANS TO SOLVE THE PROBLEM

To achieve the above objective, an electric double layer capacitor of embodiments of the present disclosure is an electric double layer capacitor formed by impregnating an element which is a positive electrode and a negative electrode wound via a separator with electrolytic solution, in which the electrolytic solution contains γ-butyrolactone as a solvent, and capacitance Cp of the positive electrode and capacitance Cn of the negative electrode are Cp>Cn.

When the withstand voltage of the electric double layer capacitor is increased, electrode potential of the positive electrode exceeds the range of electrode window of γ-butyrolactone, the electrochemical oxidative decomposition of γ-butyrolactone occurs, and the capacitance of the electric double layer capacitor deteriorates over time. However, as a result of keen research, the inventors have found that when the capacitance Cp of the positive electrode is larger than the capacitance Cn of the negative electrode, the electrode potential of the positive electrode and the electrode potential of the negative electrode shift in the lower direction and easily fall within the potential window of γ-butyrolactone, and γ-butyrolactone is electrochemically stabilized. Therefore, even if the withstand voltage of the electric double layer capacitor increases, decomposition reaction current of γ-butyrolactone is small, and the capacitance of the electric double layer capacitor is suppressed from deterioration over time.

A capacity ratio Cp:Cn between the capacitance Cp of the positive electrode and the capacitance Cn of the negative electrode may be 1.2:1 to 1.6:1.

When the capacity ratio Cp:Cn is within this range, the electrode potential of the positive electrode and the electrode potential of the negative electrode fall within the potential window of γ-butyrolactone even if the withstand voltage of the electric double layer capacitor is 2.7 V or more. If the capacity ratio exceeds beyond this range, the electrode potential of the negative electrode deviates from the potential window of γ-butyrolactone. If the capacity ratio is narrower than this range, the electrode potential of the positive electrode deviates from the potential window of γ-butyrolactone.

The positive electrode and the negative electrode each include a current collector and a polarizable electrode layer on the current collector, and thickness of the polarizable electrode layer of the positive electrode is 0.9 to 1.3 times thicker than thickness of the polarizable electrode layer of the negative electrode.

When a thickness ratio between the thickness Tp of the polarizable electrode layer of the positive electrode and the thickness Tn of the polarizable electrode layer of the negative electrode is within this range, the capacity ratio Cp:Cn between the capacitance Cp of the positive electrode and the capacitance Cn of the negative electrode easily falls within 1.2:1 to 1.6:1.

Therefore, by including the electrode potential (vs Ag/Ag+) of the positive electrode and the electrode potential (vs Ag/Ag+) of the negative electrode within the potential window of γ-butyrolactone, the deterioration over time of the capacitance of the electric double layer capacitor can be suppressed even if the withstand voltage of the electric double layer capacitor is increased.

That is, the electrode potential (vs Ag/Ag+) of the positive electrode may be +0.71 V to +0.62 V, and the electrode potential (vs Ag/Ag+) of the negative electrode may be -1.99 V to -2.08 V.

After applying DC voltage of 2.7 V under temperature environment of 65 °C and 2000 hours have elapsed, the electrode potential (vs Ag/Ag+) of the positive electrode may be +0.71 V to +0.45 V, and the electrode potential (vs Ag/Ag+) of the negative electrode may be -1.99 V to -2.25 V.

A strip-length of the positive electrode is longer than the negative electrode, the element is wound so that the positive electrode is positioned at the innermost and outermost circumference, and the positive electrode may protrude from the negative electrode at beginning and end of winding in the strip-length direction.

By this, when non-facing portion is produced in the positive electrode, the capacitance Cp of the positive electrode becomes larger than the capacitance Cn of the negative electrode, and the electrode potential of the positive electrode and the electrode potential of the negative electrode shift in the lower direction. Therefore, the electrode potential of the positive electrode and the electrode potential of the negative electrode further easily fall within the potential window of γ-butyrolactone, and γ-butyrolactone is electrochemically stabilized.

To achieve the above objective, a manufacturing method of the electric double layer capacitor is an aspect of the present disclosure, and the method including: a positive electrode formation process of forming a positive electrode with electrode potential (vs Ag/Ag+) of +0.71 v to +0.61 V, a negative electrode formation process of forming a negative electrode with electrode potential (vs Ag/Ag+) of -1.99 V to -2.08 V, an element formation process of winding the positive electrode and the negative electrode via a separator to form an element, and an electrolytic solution impregnation process of impregnating the element with electrolytic solution containing γ-butyrolactone as a solvent.

In this manufacturing method, after applying DC voltage of 2.7 V under temperature environment of 65 °C and 2000 hours have elapsed, the electrode potential (vs Ag/Ag+) of the positive electrode may be +0.71 V to +0.45 V, and the electrode potential (vs Ag/Ag+) of the negative electrode may be -1.99 V to -2.25 V.

### EFFECT OF INVENTION

According to the present disclosure, even if the withstand voltage of the electric double layer capacitor is increased, the electrode potential of the positive electrode and the electrode potential of the negative electrode easily fall within the potential window of γ-butyrolactone, and the deterioration over time of the capacitance of the electric double layer capacitor can be suppressed.

### BRIEF DESCRIPTION OF DRAWINGS

Fig. 1 is a graph indicating the cyclic voltammogram of γ-butyrolactone.
Fig. 2 is a diagram illustrating a winding method of the positive electrode and the negative electrode.
Fig. 3 illustrates the cyclic voltammogram of γ-butyrolactone and the positive and negative electrode potential of the comparative example 1.
Fig. 4 illustrates the cyclic voltammogram of γ-butyrolactone and the positive and negative electrode potential of the example 1.
Fig. 5 illustrates the cyclic voltammogram of γ-butyrolactone and the positive and negative electrode potential of the example 2.
Fig. 6 illustrates the cyclic voltammogram of γ-butyrolactone and the positive and negative electrode potential of the example 3.
Fig. 7 illustrates the cyclic voltammogram of γ-butyrolactone and the positive and negative electrode potential of the example 4.
Fig. 8 illustrates the cyclic voltammogram of γ-butyrolactone and the positive and negative electrode potential of the example 5.
Fig. 9 is a graph indicating the change over time of the capacity change rate of the examples 1 and 5 and the comparative example 1.
Fig. 10 is a graph indicating the change over time of the electrode potential of the positive electrode of the examples 2, 4 and 5 and the comparative example 1.
Fig. 11 is a graph indicating the change over time of the capacity change rate of the examples 2 and 6.

### EMBODIMENTS

Hereinafter, an electric double layer capacitor and a manufacturing method thereof according to the embodiment of the present disclosure will be described. Note that the present disclosure is not limited to the following embodiments.

### (Overall Structure)

An electric double layer capacitor is a passive element that utilizes electricity storage action formed at an interface of a polarizable electrode and electrolytic solution and stores and discharges electric charge by capacitance. The element of this electric double layer capacitor includes a positive electrode, a negative electrode, a separator, and electrolytic solution, and is a wound-type. The positive electrode and the negative electrode face each other via the separator. The electrolytic solution is filled in voids of the capacitor element.

This element is housed in a casing and is sealed with a sealing body. The casing is a cylinder with a bottom to house the element and, for example, is made of aluminum. The sealing body is attached to an opening of the casing by a crimping process and seals the opening of the casing. A lead terminal is connected to the positive electrode and the negative electrode. An external terminal that leads to the outside is attached to the sealing body. The lead terminal connected to the positive electrode and the negative electrode is electrically connected to the external terminal of the sealing body, so that the electric double layer capacitor can be implemented on a circuit. Furthermore, the lead terminal connected to the positive electrode and the negative electrode is lead to the outside through a through hole.

### (Electrolytic Solution)

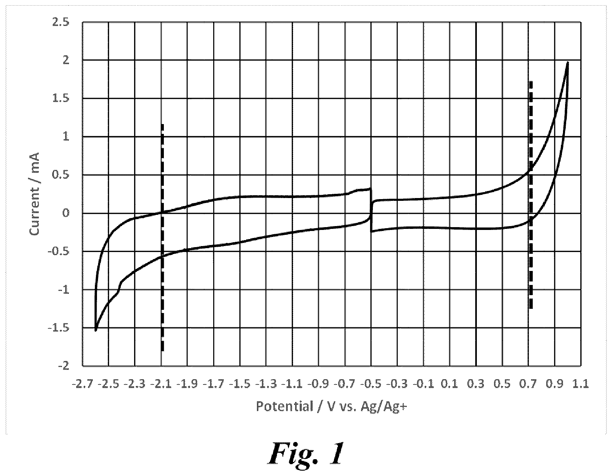

A solvent of the electrolytic solution is γ-butyrolactone. A voltammogram by the cyclic voltammetry of γ-butyrolactone is shown in Fig. 1. The cyclic voltammogram of γ-butyrolactone is measured as follows. That is, an activated carbon electrode with area of 1.5 cm × 1.5 cm and coating thickness of 29 um is used for a working electrode, an activated carbon electrode with area of 1.5 cm × 10 cm and coating thickness of 29 um is used for a counter electrode, and Ag/Ag+ reference electrode is used for a reference electrode. Solution of 1 mol of triethylmethylammonium BF4 per 1L of γ-butyrolactone is used as measurement solution. Potential scanning is started from immersion potential to 1 V on the positive side from the immersion potential. Potential scanning speed is 0.5 mV/s. Furthermore, the potential scanning is started from immersion potential to -2.6 V on the negative side from the immersion potential. Potential scanning speed is 0.5 mV/s.

As illustrated in Fig. 1, when the potential (vs. Ag/Ag+) is the horizontal axis and the current (mA) is the vertical axis, γ-butyrolactone does not exchange electrons, and the plane region near current of zero and inclination of zero falls within +0.71 V to -2.08 V. In the figures, the dotted line is the minimum value in the nagative side and the maximum value in the positive side. That is, a potential window of γ-butyrolactone is +0.71 V to -2.08 V.

An electrolyte of the electrolytic solution may be any if quaternary ammonium ions can be produced and may be one or more selected from various quaternary ammonium salt. Cations may be tetramethylammonium, ethyltrimethylammonium, tetraethylammonium, triethylmethylammonium, diethyldimethylammonium, methylethylpyrrolidinium, spirobipyrrolidinium, and anions may be BF₄-, PF₆-, ClO₄-, AsF₆-, SbF₆-, AlCl₄-, or RfSO₃-, (RfSO₂)₂N-, and RfCO₂- (Rf is a fluoroalkyl group with 1 to 8 carbon).

Typically, the quaternary ammonium salt may be tetramethylammonium BF₄, ethyltrimethylammonium BF₄, diethyldimethylammonium BF₄, triethylmethylammonium BF₄, tetraethylammonium BF₄, spirobipyrrolidinium BF₄, methylethylpyrrolidinium BF₄, tetramethylammonium PF₆, ethyltrimethylammonium PF₆, diethyldimethylammonium PF₆, triethylmethylammonium PF₆, tetraethylammonium PF₆, spirobipyrrolidinium PF₆, methylethylpyrrolidinium PF₆, tetramethylammonium bis(oxalate)borate, ethyltrimethylammonium bis(oxalate)borate, diethyldimethylammonium bis(oxalate)borate, triethylmethylammonium bis(oxalate)borate, tetraethylammonium bis(oxalate)borate, spirobipyrrolidinium bis(oxalate)borate, methylethylpyrrolidinium bis(oxalate)borate, tetramethylammonium difluorooxalateborate, ethyltrimethylammonium difluorooxalateborate, diethyldimethylammonium difluorooxalateborate, triethylmethylammonium difluorooxalateborate, tetraethylammonium difluorooxalateborate, spirobipyrrolidinium difluorooxalateborate, and methylethylpyrrolidinium difluorooxalateborate, etc.

Furthermore, an additive may be phosphoric acid and derivatives thereof (phosphoric acid, phosphorus acid, phosphate esters, and phosphonic acid, etc.), boric acid and derivatives thereof (boric acid, boric oxides, borate esters, complex of boron and compounds with hydroxyl group and/or carboxyl group, etc.), nitrates (lithium nitrate, etc.), nitro compounds (nitrobenxzoic acid, nitrophenol, nitrophenetol, nitroacetophenone, aromatic nitro compounds, etc.).

### (Electrode)

The positive electrode and the negative electrode is mainly formed by a current collector and a polarizable electrode layer. The current collector is metal such as aluminum foil, platinum, gold, nickel, titanium, and steel, etc. A shape of the current collector may be any shape such as a film-shape, a foil-shape, a plate-shape, a netshape, an expand-metal-shape, and a cylinder-shape, etc. Furthermore, a surface of the current collector may be an uneven surface such as by etching, or may be a plain surface.

The polarizable electrode layer mainly contains activated carbon. Source material for the activated carbon is derived from natural plant tissues such as coconut hemp, synthetic resin such as phenols, fossil-fuel based material such as coal, coke, and pitch, and activation treatment such as steam activation, alkaline activation, zinc chloride activation, or electric field activation, and opening treatment may be performed.

Here, the positive electrode has capacitance Cp. Also, the negative electrode has capacitance Cn. At this time, the polarizable electrode layer is adjusted so that Cp>Cn, in which the capacitance Cp of the positive electrode is larger than the capacitance Cn of the negative electrode. The capacitance Cp of the positive electrode and the capacitance Cn of the negative electrode is measured as follows. That is, the capacitance is measured by cutting out a test piece with predefined area, immersing the test piece in capacitance measurement solution in a glass measurement tank with a platinum plate as the counter electrode, and using the capacitance meter. For example, the predefined area is 1 cm², the capacitance measurement solution is aqueous solution of ammonium pentaborate at 30 °C, the capacitance meter is a potentiostat and a frequency response analyzer, an electrochemical impedance analyzer, or LCR meter, and the like, DC bias voltage is 1.5 V, and AC current is 0.5 Vrms, as the measurement condition.

When Cp>Cn in which the capacitance Cp of the positive electrode is larger than the capacitance Cn of the negative electrode, electrode potential (vs. Ag/Ag+QRE) of the positive electrode and electrode potential (vs. Ag/Ag+QRE) of the negative electrode shift in the lower direction and easily fall within a potential window of γ-butyrolactone. Therefore, γ-butyrolactone is electrochemically stabilized, and even if withstand voltage of the electric double layer capacitor is increased, decomposition reaction current of γ-butyrolactone is small and the deterioration over time of the capacitance of the electric double layer capacitor can be suppressed.

In particular, when γ-butyrolactone with the potential window of +0.71 V to -2.08 V is used as the electrolytic solution and the withstand voltage of the electric double layer capacitor is 2.7 V or more, it is preferable that the capacity ratio Cp:Cn between the capacitance Cp of the positive electrode and the capacitance Cn of the negative electrode is 1.2:1 to 1.6:1.

When the capacity ratio Cp:Cn is within this range, the electrode potential of the positive electrode and the electric double layer capacitor of the negative electrode fall within the potential window of γ-butyrolactone even when the withstand voltage of the electric double layer capacitor is 2.7 V or more. If the capacity ratio exceeds beyond this range, the electrode potential of the negative electrode deviates from the potential window of γ-butyrolactone. If the capacity ratio is narrower than this range, the electrode potential of the positive electrode deviates from the potential window of γ-butyrolactone.

For example, in the electric double layer capacitor with the withstand voltage of 2,7 V, when the capacity ratio Cp:Cn between the capacitance Cp of the positive electrode and the capacitance Cn of the negative electrode is 1.20:1, the electrode potential (vs. Ag/Ag+QRE) of the positive electrode is +0.71 V, the electrode potential (vs. Ag/Ag+QRE) of the negative electrode is -1.99 V, and both electrode potential fall within the potential window of γ-butyrolactone. Furthermore, in the electric double layer capacitor with the withstand voltage of 2,7 V, when the capacity ratio Cp:Cn between the capacitance Cp of the positive electrode and the capacitance Cn of the negative electrode is 1.55:1, the electrode potential (vs. Ag/Ag+QRE) of the positive electrode is +0.62 V, the electrode potential (vs. Ag/Ag+QRE) of the negative electrode is -2.08 V, and both electrode potential fall within the potential window of γ-butyrolactone.

Furthermore, when the capacity ratio Cp:Cn is in this range, the electrode potential (vs. Ag/Ag+QRE) of the positive electrode falls within +0.71 V to +0.45 V and the electrode potential (vs. Ag/Ag+QRE) of the negative electrode falls within -1.99 V to -2.25 V, even after the electric double layer capacitor has been used for a long time. When the electrode potential of the positive electrode and the electrode potential of the negative electrode fall within these range, keen deterioration of the capacitance can be prevented, and the deterioration over time can be suppressed. For example, a long time is a timing after applying DC voltage of 2.7 V under temperature environment of 65 °C and 2000 hours have elapsed,

Note that the potential of the positive electrode and the potential of the negative electrode are measured as follows. That is, the lead capacitor is immersed in the electrolytic solution of 1 mol of triethylmethylammonium BF4 per 1L of γ-butyrolactone. The capacitor element is impregnated with said electrolytic solution. The reference electrode (Ag/Ag+) is positioned at the outermost circumference of the capacitor element. Then, for example, the capacitor element is charged to 2.7 V at 5 A and is held for 4 hours. The potential of the positive electrode and the negative electrode relative to the reference electrode held for 4 hours is the polarization potential.

The capacitance Cp of positive electrode and the capacitance Cn of the negative electrode can be adjusted by thickness of each polarizable electrode layer. That is, to achieve the capacity ratio Cp:Cn of 1.2:1 to 1.6:1 between the capacitance Cp of the positive electrode and the capacitance Cn of the negative electrode, it is preferable to adjust thickness of the polarizable electrode layer of the positive electrode to be 0.9 to 1.3 times thicker than thickness of the polarizable electrode layer of the negative electrode. In other word, it is preferable that thickness ratio Tp:Tn between the thickness Tp of the polarizable electrode layer of the positive electrode and the thickness Tn of the polarizable electrode layer of the negative electrode is 0.9:1 to 1.3:1.

For example, the polarizable electrode layer may be formed by applying slurry of activated carbon and a binder on the current collector by doctor blading, and the like, and drying the slurry to form the electrode. A mixture of carbon material and the binder may be formed into a sheet and may be pressure-bonded on the current collector. For example, the binder may be rubber such as fluorine-based rubber, diene-based rubber, and styrenebased rubber, fluorine-containing polymers such as polytetrafluoroethylene and polyvinylidene difluoride, cellulose such as carboxymethyl cellulose and nitrocellulose, and others such as polyolefin resin, polyimide resin, acryl resin, nitrile resin, polyester resin, phenol resin, polyvinyl acetate resin, polyvinyl alcohol resin, and epoxy resin, etc. These binders may be used in single or in combination of two or more.

Note that the polarizable electrode layer may include conductive aid. The conductive aid may be carbon black such as Ketjen black, acetylene black, and channel black, carbon nanohorn, amorphous carbon, natural graphite, artificial graphite, graphitized Ketjen black, mesoporous carbon, carbon nanotube, and carbon nanofiber, etc. The carbon nanotube may be single-walled carbon nanotube (SWCNT) with a single layer of a graphene sheet, or multiwalled carbon nanotube (MWCNT) in which two or more layers of graphene sheets are curled up on a same axis and a tube wall forms multiple layers.

Furthermore, phosphorus may be adhered on a surface of the current collector to suppress hydration and oxidation of the current collector. For example, the current collector is immersed in aqueous solution of phosphoric acid or phosphate. Furthermore, a carbon coating layer including the conductive aid such as graphite may be provided between the current collector and the polarizable electrode layer. By applying a slurry including the conductive aid such as graphite and the binder on the surface of the current collector and drying the slurry, the carbon coating layer can be formed.

Such positive electrode and negative electrode have a long strip-shape and are wound spirally via the separator. In the positive electrode and the negative electrode, the direction along the spiral is the strip-length direction, and generally, the positive electrode and the negative electrode is wound along the length direction, which is the strip-length direction.

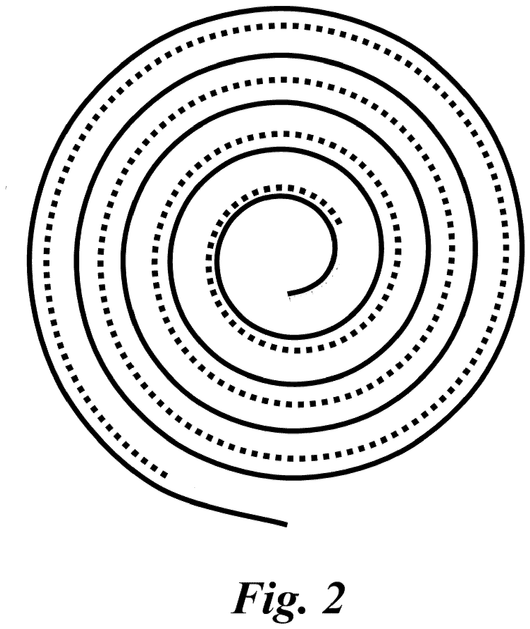

Fig. 2 is a schematic diagram illustrating a winding method of the positive electrode and the negative electrode, in which the solid line is the positive electrode and the dotted line is the negative electrode. As illustrated in Fig. 2, the positive electrode is longer than the negative electrode in the strip-length direction when comparing the lengths of the positive electrode and the negative electrode in the strip-length direction, and the electrodes are wound so that the positive electrode is positioned in the innermost and outermost circumference and forms a non-facing portion where the beginning and end of the winding of the positive electrode do not face the negative electrode. That is, the element is formed so that the positive electrode is at the beginning and end of the winding. By winding the positive electrode one round or more in advance, then winding layers of positive electrode, the separator, and the negative electrode so that the positive electrode is in the inner circumferential side and the negative electrode is in the outer circumferential side, and finally winding the positive electrode at the outermost circumference so as to extend beyond the end of the negative electrode, negative electrode foil is positioned in the innermost and outermost circumference.

In this way, when the non-facing portion is produced in the positive electrode with the positive electrode at the beginning and end of the winding, the capacitance Cp of the positive electrode becomes larger than the capacitance Cn of the negative electrode, and the electrode potential of the positive electrode and the electrode potential of the negative electrode can be shifted in the lower direction. Therefore, the electrode potential of the positive electrode and the electrode potential of the negative electrode further easily fall within the potential window of γ-butyrolactone, and γ-butyrolactone is electrochemically stabilized.

### (Separator)

The separator prevents a contact between the positive electrode foil and the negative electrode. The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin and the like, and the resin may be used in single or in combination.

### (Manufacturing Method)

The electric double layer capacitor is manufactured through a positive electrode formation process, a negative electrode formation process, an element formation process, and an electrolytic solution impregnation process. In the positive electrode formation process, the polarizable electrode layer is formed on the current collector and is adjusted to form the positive electrode with the electrode potential (vs. Ag/Ag+) of +0.71 V to + 0.62 V. Furthermore, in the negative electrode formation process, the polarizable electrode layer is formed on the current collector and is adjusted to form the negative electrode with the electrode potential (vs. Ag/Ag+) of -1.99 V to - 2.08 V.

In the element formation process, the positive electrode and the negative electrode are wound spirally via the separator. At this time, by winding the positive electrode one round or more in advance, then winding layers of positive electrode, the separator, and the negative electrode so that the positive electrode is in the inner circumferential side and the negative electrode is in the outer circumferential side, and finally winding the positive electrode at the outermost circumference so as to extend beyond the end of the negative electrode, negative electrode foil is positioned in the innermost and outermost circumference.

In the electrolytic solution impregnation process, the element is impregnated with the electrolytic solution containing γ-butyrolactone as the main solvent. The impregnation may be performed under depressurized condition. After the element is impregnated with the electrolytic solution, the element is housed in the casing, and the casing is sealed by the sealing body.

Hereinafter, the present disclosure will be described in more detail based on examples. Note that the present disclosure is not limited to the following examples.

The electric double layer capacitors with the withstand voltage of 2.7 V of the examples 1 to 5 and the comparative example 1 were produced, as follows That is, steam-activated activated carbon, carbon black, carboxymethyl cellulose as a dispersant, SBR emulsion as a binder, and pure water were mixed to obtain a slurry. Furthermore, current collector foil was produced by immersing the etched aluminum foil in phosphoric acid aqueous solution to adhere phosphorus on the surface thereof, and applying coating material including graphite on the surface of the foil to form the carbon coating layer on both surface of the aluminum foil. The similarly produced slurry was applied and dried on both surface of the produced current collector to produce the positive electrode and the negative electrode with the same stripwidth.

The positive electrode and the negative electrode were overlaid via the rayon separator along the center lines thereof extending in the strip-length direction, to produce the wound-type element. In the element, the beginning and end of the winding was the positive electrode. The positive electrode was wound in advance, the layers of positive electrode, the separator, and the negative electrode were wound so that the positive electrode was in the inner circumferential side and the negative electrode was in the outer circumferential side, and the positive electrode was wound at the outermost circumference so as to extend beyond the end of the negative electrode. Therefore, the non-facing portion where the positive electrode did not face the negative electrode was formed in the beginning and end of the positive electrode.

The element was impregnated with the electrolytic solution. 1.0 M of triethylmethylammonium BF₄ was used for the solute of the electrolytic solution. 1.0 M indicates a number of moles (mol/L) of the electrolyte relative to 1L of the electrolytic solution. The solvent of the electrolytic solution is γ-butyrolactone. The element was impregnated with this electrolytic solution, and the element impregnated with the electrolytic solution was housed and sealed in the Φ18×50L casing by the sealing body.

As shown in the table 1, the electric double layer capacitors of the examples 1 to 5 and the comparative example 1 had different coating thickness of the polarizable electrode layer, different length of the positive electrode and the negative electrode, and thereby different capacity ratio Cp:Cn between the capacitance Cp of the positive electrode and the capacitance Cn of the negative electrode.

**[Table 1]**

| | **Application Thickness of Positve Electrode (µm)** | **Application Thickness of Negative Electrode (µm)** | **Strip-Length of Positive Electrode (mm)** | **Strip-Length of Negative Electrode (mm)** | **Capacity Ratio (Cp:Cn)** |
|---|---|---|---|---|---|
| **Comparative Example 1** | **37** | **47** | **640** | **600** | **1.00:1** |
| **Example 1** | **39** | **41** | **650** | **610** | **1.20:1** |
| **Example 2** | **39** | **39** | **665** | **625** | **1.28:1** |
| **Example 3** | **41** | **39** | **648** | **608** | **1.34:1** |
| **Example 4** | **44** | **36** | **655** | **615** | **1.55:1** |
| **Example 5** | **52** | **35** | **623** | **580** | **1.90:1** |

Note that, since the capacity ratio Cp:Cn was 1.2:1 when the potential of the positive electrode and the negative electrode in the range of 2.7 V was 1:1, the capacity Cp of the positive electrode was multiplied by the coefficient of 1.2 to calculate the capacity ratio. The reason for this multiplication was to consider the difference between ion size of the cation component and anion component and the magnitude of reaction current, at the positive electrode side.

As shown in the above table 1, the capacity ratio Cp:Cn of the comparative example 1 was 1.00:1, and the capacitance of the positive electrode and the negative electrode in the comparative example 1 was the same. In contrast, the capacity ratio between the capacitance Cp of the positive electrode and the capacitance Cn of the negative electrode in the examples 1 to 5 was Cp>Cn, the capacitance Cp of the positive electrode was larger than the capacitance Cn of the negative electrode.

In detail, the capacity ratio Cp:Cn of the example 1 was 1.20:1, the capacity ratio Cp:Cn of the example 2 was 1.28:1, the capacity ratio Cp:Cn of the example 3 was 1.34:1, the capacity ratio Cp:Cn of the example 4 was 1.55:1, and the capacity ratio Cp:Cn of the example 5 was 1.90:1,

Note that the amount of activated carbon in the non-facing portion of the positive electrode was the same in the examples 1 to 5 and the comparative example 1, and was 6 wt% relative to the total amount of activated carbon applied on the positive electrode.

### (Potential Measurement Test of Positive and Negative Electrodes)

The electrode potential V (vs. Ag/Ag+) of the positive electrode and the negative electrode of the electric double layer capacitors of the examples 1 to 5 and the comparative example 1 was measured. The measurement method for the electrode potential V was as follows. That is, the elements of the examples 1 to 5 and the comparative example 1 were immersed in the electrolytic solution. The elements were also impregnated with the electrolytic solution. The reference electrode (Ag/Ag+) was positioned at the outermost circumference of the elements. Then, the elements were charged up to 2.7 V at 5 A for 4 hours. Potential of the positive electrode and the negative electrode relative to the reference electrode after being held for 4 hours was the polarization potential.

The measurement result of the electrode potential of the examples 1 to 5 and the comparative example 1 is shown in the below table 2.

**[Table 2]**

| | **Capacity Ratio (Cp:Cn)** | **Electrode Potential of Positive Electrode (vs. Ag/Ag+)** | **Electrode Potential of Negative Electrode (vs. Ag/Ag+)** |
|---|---|---|---|
| **Comparative Example 1** | **1.00:1** | **0.77** | **-1.93** |
| **Example 1** | **1.20:1** | **0.71** | **-1.99** |
| **Example 2** | **1.28:1** | **0.68** | **-2.02** |
| **Example 3** | **1.34:1** | **0.69** | **-2.01** |
| **Example 4** | **1.55:1** | **0.62** | **-2.08** |
| **Example 5** | **1.90:1** | **0.51** | **-2.19** |

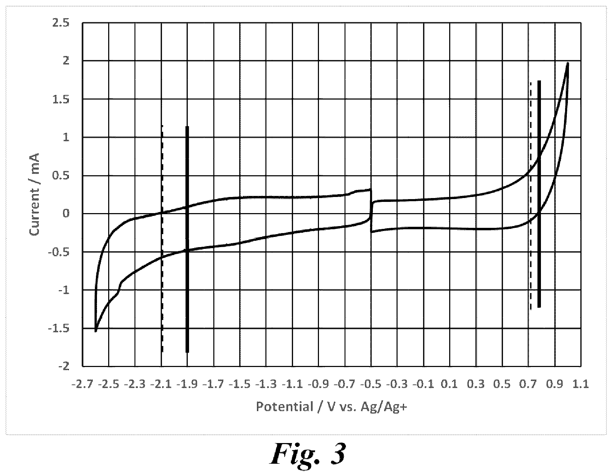

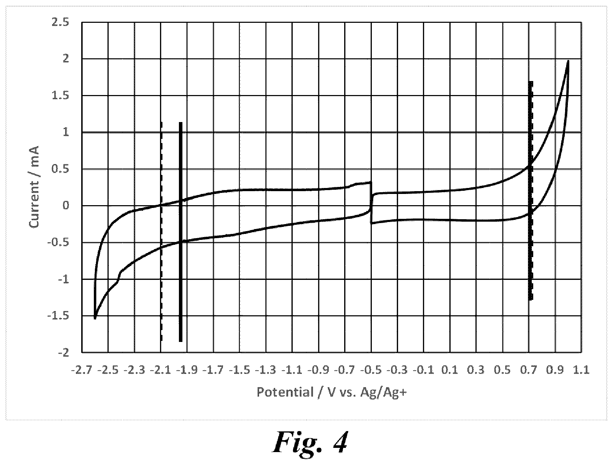

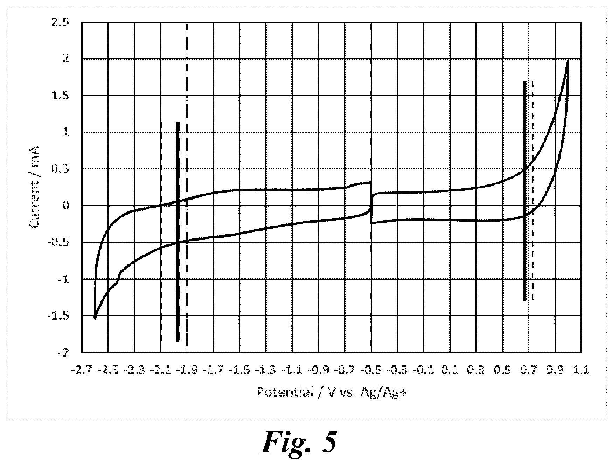

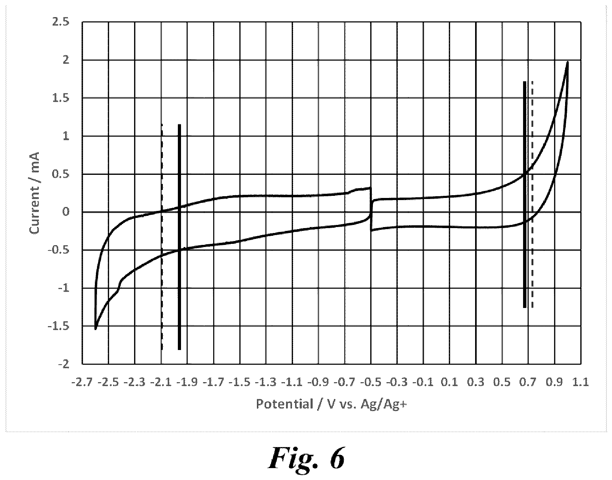

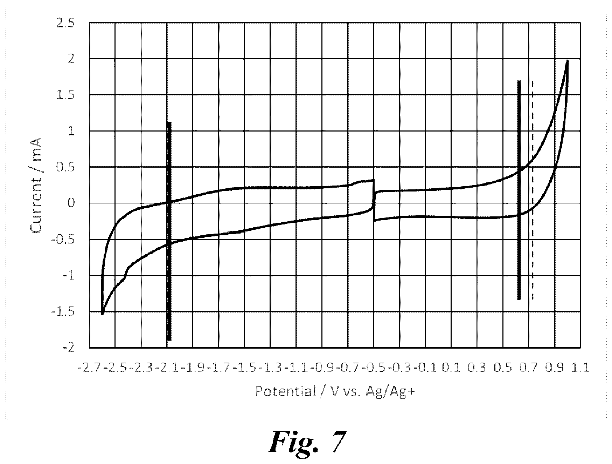

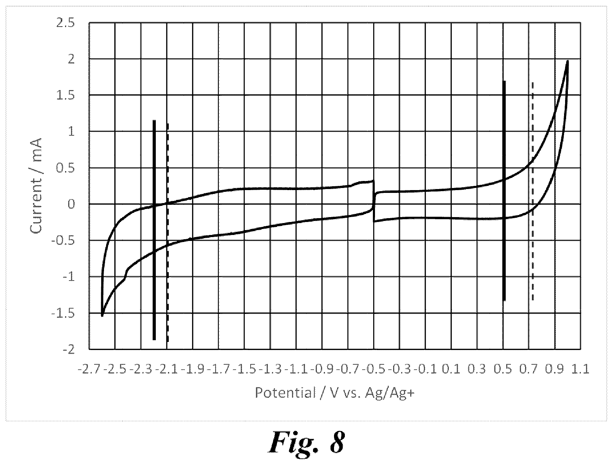

Furthermore, each electrode potential on the cyclic voltammogram of γ-butyrolactone is described based on the above table 2. The results are shown in Figs. 3 to 8. Fig. 3 illustrates the cyclic voltammogram of γ-butyrolactone and the positive and negative electrode potential of the comparative example 1. Figs. 4 to 8 illustrates the cyclic voltammogram of γ-butyrolactone and the positive and negative electrode potential of each example. In the figures, the dotted line is the minimum value at the negative side and the maximum value at the positive side, and the solid line is the electrode potential of the positive electrode and the electrode potential of the negative electrode.

As shown in the table 2 and Figs. 3 to 8, in the examples 1 to 5 and the comparative example 1, the potential difference between the negative electrode and the positive electrode was all 2.7 V, and the electric double layer capacitors with the withstand voltage of 2.7 V were produced. However, regarding the comparative example 1 in which the capacitance at the positive electrode and the negative electrode was the same, although the electrode potential of the negative electrode was within the potential window of γ-butyrolactone, the electrode potential of the positive electrode significantly exceeded beyond the upper limit of the potential window of γ-butyrolactone and clearly belonged to the range in which the inclination had rapidly changed.

In contrast, in the examples 1 to 5 in which the capacitance Cp of the positive electrode was larger than the capacitance Cn of the negative electrode, the electrode potential of the positive electrode and the electrode potential of the negative electrode were approximately within the potential window of γ-butyrolactone. In particular, in the examples 1 to 4 in which the capacity Cp:Cn of the positive electrode and the negative electrode was 1.20:1 to 1.70:1, the electrode potential of the negative electrode was at a position much away from the lower limit of the potential window of γ-butyrolactone.

### (Capacitance Measurement Test)

The constant voltage of 2.7 V was applied to the electric double layer capacitors of the examples 1 to 5 and the comparative examples 1 and 8 at 65 °C, and the initial discharge capacity and the discharge capacity after each time had elapsed was measured, to calculate the capacity change rate ΔCap (%).

The capacitance of the electric double layer capacitors of the examples 1 to 5 and the comparative example 1 was measured according to the constant current discharge method. That is, the electric double layer capacitor was charged for 20 minutes by applying constant voltage of 2.7 V under the temperature environment of 20 °C. After the charging had been completed, the discharging was performed promptly at the constant current I, and the required time T spent for the voltage to fall from measurement start voltage to measurement end voltage 1.35 V excluding IR drop was measured. Then, the capacity (F) was calculated from a product of the constant current I and the time T, and a difference (V) between the measurement start voltage and the measurement end voltage. The measurement was performed four times and the average value was taken,

The change over time of the capacity change rate ΔCap of the electric double layer capacitors of the examples 1 to 5 and the comparative example 1 are shown in the below table 3.

**[Table 3]**

| **Time** | **ΔCap (%) After 500 Hours** | **ΔCap (%) After 1000 Hours** | **ΔCap (%)After 1500 Hours** | **ΔCap (%) After 2000 Hours** |
|---|---|---|---|---|
| **Comparative Exmmplae 1** | **-18.3** | **-22.5** | **-26.0** | **-29.0** |
| **Example 1** | **-16.5** | **-20.1** | **-22.8** | **-25.1** |
| **Example 2** | **-16.3** | **-19.5** | **-22.2** | **-24.7** |
| **Example 3** | **-16.4** | **-20.0** | **-22.7** | **-24.2** |
| **Example 4** | **-13.8** | **-16.9** | **-19.6** | **-22.0** |
| **Example 5** | **-13.3** | **-17.5** | **-20.7** | **25.4** |

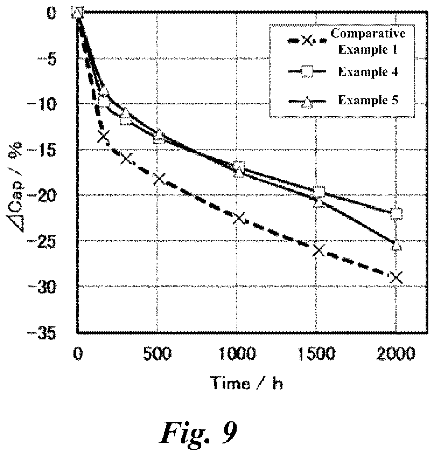

Furthermore, the change over time of the capacity change rate ΔCap of the electric double layer capacitors of the examples 1 the example 5 and the comparative example 1 are shown in the below table 9 Fig. 9 is a graph comparing the change over time of the capacity change rate ΔCap of the electric double layer capacitors of the examples 4 and 5 and the comparative example 1. Note that, in Fig. 9, the graph with X-plots indicates the comparative example 1, the graph with square plots indicates the example 4, and the graph with triangle plots indicates the example 5.

As shown in the table 3, it was observed that the decrease in the capacitance over time of the electric double layer capacitors of the examples 1 to 5 was suppressed in comparison with the electric double layer capacitor of the comparative example 1.

In particular, for the examples 1 to 4 in which the capacity Cp:Cn of the positive electrode and the negative electrode was 1.20:1 to 1.60:1, the inclination of the capacitance change rate Δcap in the time range Ta from 1000 hours to 2000 hours elapsed was comparable to the inclination of the capacitance change rate Δcap in the time range Tb from 500 hours to 1000 hours after the constant voltage was applied, and the electric double layer capacitor was highly reliable also in the range of 1000 hours to 2000 hours. As illustrated in Fig. 9, for the example 5 in which the capacity Cp:Cn of the positive electrode and the negative electrode was 1.90:1, the suppression of the decrease in the capacitance was excellent when compared to the comparative example 1, but the inclination of the capacitance change rate ΔCap in the time range Ta was getting larger when compared to the inclination of the capacitance change rate ΔCap in the time range TB.

Accordingly, it was observed that, when the electrolytic solution contained γ-butyrolactone as the main solvent, since the capacitance Cp of the positive electrode and the capacitance Cn of the negative electrode were Cp>Cn, the electrode potential (vs. Ag/Ag+) of the positive electrode and the electrode potential (vs. Ag/Ag+) of the negative electrode were within the potential window of γ-butyrolactone and the decrease in the capacitance over time of the electric double layer capacitor was suppressed.

Furthermore, it was observed that, since the capacity ratio Cp:Cn between the capacitance Cp of the positive electrode and the capacitance Cn of the negative electrode was 1.2:1 to 1.6:1, the electrode potential of the positive electrode and the electrode potential of the negative electrode fell within the potential window of γ-butyrolactone even if the withstand voltage of the electric double layer capacitor is 2.7 V or more. Furthermore, it was observed that, when the thickness ratio Tp:Tn between the thickness Tp of the polarizable electrode layer of the positive electrode and the thickness Tn of the polarizable electrode layer of the negative electrode was within this range, the capacity ratio Cp:Cn between the capacitance Cp of the positive electrode and the capacitance Cn of the negative electrode could be adjusted within 1.2:1 to 1.6:1.

Here, the constant voltage of 2.7 V was applied to the electric double layer capacitors of the examples 1 to 5 and the comparative example 1 at 65 °C, and the initial discharge capacity and the discharge capacity after each time had elapsed, and the electrode potential of the positive electrode and the electrode potential of the negative electrode at each time had elapsed were measured. The results are shown in the table 4.

**[Table 4]**

| | **Electrode Potential of Positive Electrode [V]** | | | | | | |
|---|---|---|---|---|---|---|---|
| | **After 0 Hour** | **After 500 Hour** | **After 1000 Hour** | **After 1500 Hour** | **After 2000 Hour** | **After 3000 Hour** | **After 4000 Hour** |
| **Comparative Example 1** | **0.77** | **0.72** | **0.64** | **0.60** | **0.56** | **0.54** | **0.51** |
| **Example 1** | **0.71** | **0.68** | **0.61** | **0.57** | **0.54** | **0.51** | **0.48** |
| **Example 2** | **0.68** | **0.65** | **0.58** | **0.54** | **0.51** | **0.48** | **0.45** |
| **Example 3** | **0.69** | **0.65** | **0.58** | **0.54** | **0.51** | **0.48** | **0.45** |
| **Example 4** | **0.62** | **0.58** | **0.52** | **0.48** | **0.45** | **0.42** | **0.39** |
| **Example 5** | **0.51** | **0.45** | **0.45** | **0.42** | **0.40** | **0.36** | **0.31** |

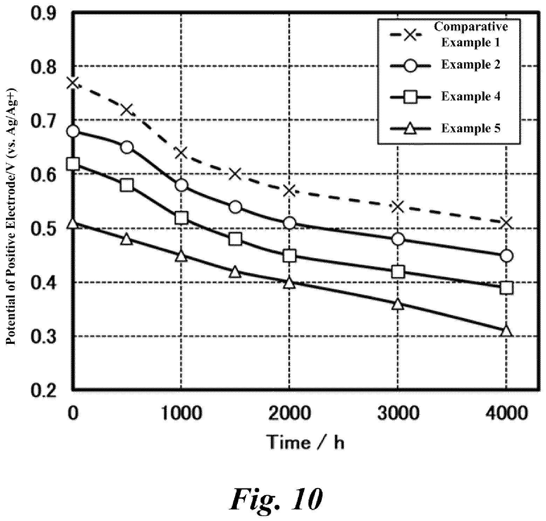

Furthermore, based on the table 4, Fig. 10 illustrates the change over time of the electrode potential of the positive electrode of the examples 2, 4 and 5 and the comparative example 1. In Fig. 10, the graph with X-plots indicates the comparative example 1, the graph with circular plots indicates the example 2, the graph with square plots indicates the example 4, and the graph with triangle plots indicates the example 5.

As shown in the table 4 and Fig. 10, for the example 5, it was observed that the electrode potential (vs Ag/Ag+) of the positive electrode at 2000 hours was below +0.71 V to + 0.45 V. In other word, the examples 1 to 4 were within +0.71 V to + 0.45 V even after 2000 hours had elapsed. Therefore, it was observed that, in the electric double layer capacitors of the examples 1 to 4, the inclination of the capacity change rate ΔCap after 2000 hours had elapsed did not change, and the deterioration of the capacity was suppressed.

### (Winding Test)

The electric double layer capacitor of the examples 6 was produced. In the example 6, the strip-length of the negative electrode was longer than the positive electrode, contrary to the example 2. Therefore, in the example 6, the element was wound so that the negative electrode was positioned at the innermost and outermost circumference, and the negative electrode protruded from the positive electrode at beginning and end of winding.

The example 6 was produced by the same method, the same condition, the same composition, and the same structure as the example 2, and the capacity ratio between the capacitance Cp of the positive electrode and the capacitance Cn of the negative electrode was 1.28:1 as same as the example 2. However, to make the capacity ratio of the examples 6 and 2 the same, in the example 2, the coating thickness of the positive and negative polarizable electrode layer was 39 um, the strip-length of the polarizable electrode was 665 mm, and the strip-length of the negative electrode was 625 um, and in the example 6, the coating thickness of the polarizable electrode layer of the polarizable electrode was 42 um, the coating thickness of the polarizable electrode layer of the negative electrode was 37 um, the strip-length of the polarizable electrode was 620 mm, and the strip-length of the negative electrode was 663 um.

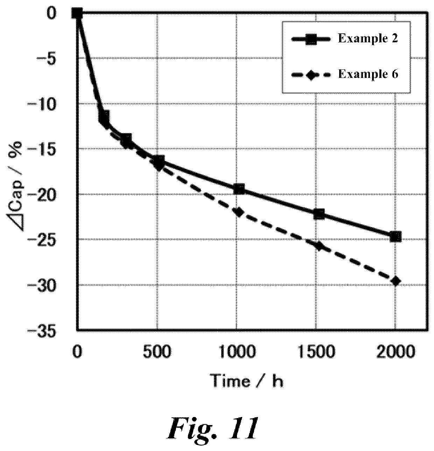

The capacity change rate ΔCap of the electric double layer capacitors of the examples 2 and 6 was calculated. The results are shown in Fig. 11. Fig. 11 is a graph illustrating the change over time of the capacity change rate ΔCap (%) of the electric double layer capacitors of the examples 2 and 6. Note that in the graph, the solid line indicates the example 2, and the broken line indicates the example 6.

As illustrated in Fig. 10, the capacity change rate ΔCap of the electric double layer capacitors of the examples 2 was excellent than the electric double layer capacitor of the example 6. That is, it was observed that, by making the strip-length of the positive electrode longer than that of the negative electrode, winding the positive electrode to be positioned at the innermost and outermost circumference, and making the positive electrode to protrude from the negative electrode at beginning and end of winding in the strip-length direction, the capacity change rate ΔCap of the electric double layer capacitor could be further improved.

## Claims

1. An electric double layer capacitor formed by impregnating an element which is a positive electrode and a negative electrode wound via a separator with electrolytic solution,
wherein:
the electrolytic solution contains γ-butyrolactone as a solvent, and
capacitance Cp of the positive electrode and capacitance Cn of the negative electrode are Cp>Cn.

2. The electric double layer capacitor according to claim 1, wherein a capacity ratio Cp:Cn between the capacitance Cp of the positive electrode and the capacitance Cn of the negative electrode may be 1.2:1 to 1.6:1.

3. The electric double layer capacitor according to claim 1 or 2, wherein:
the positive electrode and the negative electrode each include a current collector and a polarizable electrode layer on the current collector, and
thickness of the polarizable electrode layer of the positive electrode is 0.9 to 1.3 times thicker than thickness of the polarizable electrode layer of the negative electrode.

4. The electric double layer capacitor according to claim 1 or 2, wherein the electrode potential (vs Ag/Ag+) of the positive electrode and the electrode potential (vs Ag/Ag+) of the negative electrode are included within the potential window of γ-butyrolactone.

5. The electric double layer capacitor according to claim 1 or 2, wherein:
the electrode potential (vs Ag/Ag+) of the positive electrode is +0.71 V to +0.62 V, and
the electrode potential (vs Ag/Ag+) of the negative electrode is -1.99 V to -2.08 V.

6. The electric double layer capacitor according to claim 5, wherein after applying DC voltage of 2.7 V under temperature environment of 65 °C and 2000 hours have elapsed, the electrode potential (vs Ag/Ag+) of the positive electrode is +0.71 V to +0.45 V, and the electrode potential (vs Ag/Ag+) of the negative electrode is -1.99 V to -2.25 V.

7. The electric double layer capacitor according to claim 1 or 2, wherein:
a strip-length of the positive electrode is longer than the negative electrode,
the element is wound so that the positive electrode is positioned at the innermost and outermost circumference, and
the positive electrode may protrude from the negative electrode at beginning and end of winding in the strip-length direction.

8. A manufacturing method of the electric double layer capacitor comprising:
a positive electrode formation process of forming a positive electrode with electrode potential (vs Ag/Ag+) of +0.71 v to +0.62 V;
a negative electrode formation process of forming a negative electrode with electrode potential (vs Ag/Ag+) of -1.99 V to -2.08 V;
an element formation process of winding the positive electrode and the negative electrode via a separator to form an element; and
an electrolytic solution impregnation process of impregnating the element with electrolytic solution containing γ-butyrolactone as a solvent.

9. the manufacturing method of the electric double layer capacitor according to claim 8, wherein after applying DC voltage of 2.7 V under temperature environment of 65 °C and 2000 hours have elapsed, the electrode potential (vs Ag/Ag+) of the positive electrode may be +0.71 V to +0.45 V, and the electrode potential (vs Ag/Ag+) of the negative electrode may be -1.99 V to -2.25 V.
